# EUROPÄISCHE PATENTSCHRIFT

(11) **EP 1 614 944 B1**
(45) Veröffentlichungstag und Bekanntmachung des Hinweises auf die Patenterteilung: **03.12.2008**
(21) Anmeldenummer: 05090206.3
(22) Anmeldetag: 06.07.2005
(51) Int. Cl.: F16K 11/085, F24D 3/10, F24D 19/10

(54) **Mehrwegemisch- oder verteilventil**
Multiple way valve or distribution valve
Vanne à voies multiples ou vanne de distribution

(30) Priorität: 06.07.2004 DE 102004033591; 07.07.2004 DE 102004033067
(43) Veröffentlichungstag der Anmeldung: 11.01.2006
(73) Patentinhaber: HG Baunach GmbH & Co KG, 41836 Hückelhoven (DE)
(72) Erfinder: Baunach, Georg, 52074 Aachen-Laurensberg (DE)
(74) Vertreter: Heim, Johann-Ludwig

(56) Entgegenhaltungen:
- DE-A1- 10 214 242
- DE-C1- 19 821 256
- GB-A- 1 097 863
- US-B1- 6 684 722

## Beschreibung

Die vorliegende Erfindung bezieht sich auf ein Mehrwegemisch- oder - verteilventil mit einem Ventilgehäuse und einem in ihm gelagerten Kücken zum Verbinden von Anschlüssen wenigstens einer Wärmequelle mit wenigstens einer Wärmesenke, von denen eine mit einer Umwälzpumpe versehen ist

Die grundsäztzliche Funktion eines solchen Mehrwegemischventiles für eine Heizungsanlage nach dem einleitenden Teil des ersten unabhängigen Patentanspruches ist bekanntgeworden aus der Deutschen Patentanmeldung 198 21 256.4 C1 und eine Verbesserung der konstruktiven Ausführung des Mehrwegemischventiles ist Gegenstand der weiteren auch der Inhaberin dieser Anmeldung zugehörigen Deutschen Patentanmeldung 102 14 242.4 A1.

Das auf die erstgenannte Anmeldung erteilte Patent befasst sich mit einem Verfahren zum Betreiben einer Umlaufflüssigkeitsheizung oder -kühlung mit einer als Kessel ausgebildeten Wärmequelle, deren Vor- und Rücklaufleitungen über eine Ventilkombination mit den jeweiligen Vor- und Rücklaufleitungen zweier Wärmesenken verbunden sind, wobei sich im Zweig jeder Wärmesenke eine Umwälzpumpe befindet. Je nach Schaltstellung der beiden Umschalt- bzw. Mischventile sind die beiden Wärmesenken hintereinander, parallel oder sowohl in Serie als auch parallel geschaltet, wobei dann die Durchsätze durch die beiden Wärmesenken variieren können. Die Wärmesenke mit dem höheren Temperaturniveau liegt strömungsmässig stromauf der mit dem niedrigeren.

Die zweitgenannte Patentanmeldung 102 14 242.4 A1 schafft hier ein einziges Mehrwegemischventil, das die Ventilkombination der beiden Einzelventile nach der erstgenannten DE 198 21 256 C1 zusammenfasst, so dass die Regelfunktion der Anlage signifikant verbessert wird. Darüberhinaus ist noch aus der Deutschen Patentanmeldung 102 14 244. 0 A1 ein Rohrset bekanntgeworden, mit dessen Hilfe die einzelnen Anschlüsse des Mehrwegemischventiles mit der Wärmequelle und der(n) Wärmesenke(n) bzw. deren Hilfsanschlüssen verbunden werden können.

Es hat sich aber in der praktischen Ausgestaltung des Mehrwegemischventiles und seiner Verrohrung gezeigt, dass insbesondere bei seiner bzw. ihrer Anordnung in einem relativ engen Gehäuse einer Wärmequelle Platznot entsteht, weil das Gehäuse nicht wegen des unterzubringenden Mehrwegemischventiles samt Verrohrung baulich vergrössert werden kann. Zudem besteht es aus zu vielen relativ teuer zu fertigenden Einzelelementen.

Der vorliegenden Erfindung liegt somit die Aufgabe zugrunde, ein Mehrwegemisch- und -verteilventil nach den einleitenden Teilen der unabhängigen Patentansprüche dahingehend zu verbessern, dass es unter Verwendung möglichst weniger Bauelemente auskommt, sowie billig und leicht herstellbar ist.

Die Lösung dieser Aufgabe erfolgt erfindungsgemäss bei einem Mehrwegemischventil der eingangs näher bezeichneten Art mit den Merkmalen des ersten unabhängigen Patentanspruches. Bei einem Mehrwegeverteilventil erfolgt die Lösung dieser Aufgabe erfindungsgemäss mit den Merkmalen des zweiten unabhängigen Patentanspruches. Hierdurch wird der grosse Vorteil erreicht, dass das Mehrwegemisch- oder -verteilventil in der Anzahl seiner Ein- bzw. Auslässe leicht variierbar und damit den Gegebenheiten anpassbar ist.

Weitere Ausgestaltungen und besonders vorteilhafte Weiterbildungen der Erfindung sind aus den Merkmalen der abhängigen weiteren Patentansprüche ersichtlich, die einzeln oder in beliebigen Kombinationen erfindungswesentlich sein können.

Als Stand der Technik werden herkömmliche Drei- und Vierwegemischer sowie Mehrwege-Mischer mit drei Zuläufen und einem Ablauf gemäß den Patentanmeldungen DE 198 21 256 sowie insbesondere Drehschieber gemäß den Patentanmeldungen DE 102 14 242 und DE 102 14 244 mit einer Steuerfunktion gemäß Tab. 1 angesehen:

**Tab. 1**

| Lastfall | Vollast | Starklast | Grenzlast | Schwachlast | Leerlauf |
|---|---|---|---|---|---|
| Eingang 1 | Offen | Teilw. Offen | geschlossen | geschlossen | geschlossen |
| Eingang 2 | geschlossen | Teilw. Offen | offen | teilw. offen | geschlossen |
| Eingang 3 | geschlossen | Geschlossen | geschlossen | teilw. offen | Offen |
| Stellung | Endpunkt I | Bereich I | Mittelpunkt | Bereich II | Endpunkt II |

### Hierbei treten folgende Nachteile auf:

Häufig besitzen Pufferspeicher mehr als drei Anschlüsse, für deren vollständige Nutzung bisher kein Ventil zur Verfügung steht, so daß in der Praxis auf Kaskaden zurückgegriffen werden muß.

Durch die räumliche Anordnung der Zuläufe in einer Ebene senkrecht zur Drehachse des Kükens entsteht eine Anordung mit relativ großer räumlicher Tiefe, da der Stellantrieb koaxial vor dem Mischer montiert wird.

Schieber und insbesondere Drehschieber (Hähne) benötigen einen Spalt zwischen dem beweglichen Stellkörper (Küken) und dem Gehäuse, durch den ein nicht regelbarer, nur von äußeren Druckdifferenzen abhängiger Leckagestrom fließt, der die Regelgüte des Mischers verschlechtert.

Die Erfindung erschliesst sich in ihrer gesamten Breite in der folgenden Gruppenbeschreibung für Ventile mit beliebig vielen Eingängen und genau festgelegter Steuerfunktion.

Hierzu erfolgt zunächst eine Begriffsbestimmung: Es sollen im folgenden nur Misch- oder Verteilventile gemeint sein, bei denen genau ein immer offener (nicht steuerbarer) Anschluß Ⓞ wahlweise mit zwei oder mehr weiteren zu öffnenden und zu schließenden (steuerbaren) Anschlüssen {①;②;③;④;⑤;...} verbunden werden kann. Während die genannten Vierwegemischer dieser Gruppe nicht angehören, da bei ihnen sämtliche Anschlüsse stets in irgend einer Weise mit mindestens einem weiteren Anschluß verbunden sind, bilden die genannten Dreiwegemischer die einfachsten Vertreter dieser hier erstmals offenbarten Gruppe, der ebenfalls die vorgenannten Mehrwegemischer mit drei Zuläufen und einem Ablauf gemäß Patentanmeldung DE 198 21 256 angehören. Handelt es sich bei dem nicht steuerbaren Anschluß um den Ausgang, so handelt es sich um ein Mischventil, im umgekehrten Fall um ein Verteilventil. Weiterhin soll als Öffnungsgrad eine Zahl aus dem Intervall [0;1] gemeint sein, wobei 0 für "vollständig geschlossen", 1 für "vollständig offen" und jede Zahl innerhalb des Intervalls [0;1] für die entsprechende Zwischenstellung des Anschlusses stehen soll. Des weiteren sollen nur solche Ventile betrachtet werden, bei denen die Öffnungsgrade in Abhängigkeit von der Ventilstellung folgende Eingenschaften besitzen:

Jeder Anschluß ist genau an einer Stelle innerhalb des gesamten Stellbereiches vollständig geöffnet; an dieser Stelle sind alle anderen steuerbaren Anschlüsse geschlossen; die Ventilstellungen befinden sich dann im dem Anschluß entsprechenden sogenannten Stellpunkt; die Endpunkte des Stellbereiches sind solche Stellpunkte; je nach Anzahl der steuerbaren Anschlüsse ergeben sich weitere Stellpunkte innerhalb des gesamten Stellbereiches. Zwischen zwei Stellpunkten liegt ein einzelner Stellbereich; durchläuft man einen solchen Stellbereich von einem Stellpunkt zum anderen, so verringert sich der Öffnungsgrad des einen Anschlusses stetig bis zum Schliesspunkt, während der Öffnungsgrad des anderen Anschlusses stetig bis zur maximalen Öffnung ansteigt, alle übrigen steuerbaren Anschlüsse sind dabei geschlossen.

Auch dies trifft für den Dreiwegemischer und den Mehrwegemischer gemäß der Patentanmeldung DE 198 21 256 zu. Die Steuerung erfolgt durch einen beweglichen Stellkörper mit einer Dreh- oder Hubbewegung. Die Stellpunkte sollen im Weiteren mit Bruchteilen bezeichnet werden:

**Tab. 2**

| Lastfall | Vollast | Starklast | Grenzlast | Schwachlast | Leerlauf |
|---|---|---|---|---|---|
| steuerb. A. ① | offen | teilw. offen | geschlossen | geschlossen | Geschlossen |
| steuerb. A. ② | geschlossen | teilw. offen | offen | teilw. offen | Geschlossen |
| steuerb. A. ③ | geschlossen | geschlossen | geschlossen | teilw. offen | Offen |
| Stellung alt | Endpunkt I | Bereich I | Mittelpunkt | Bereich II | Endpunkt II |
| Stellung neu | Punkt 0 | Bereich I | Punkt ½ | Bereich 11 | Punkt 1 |

Der erfinderische Schritt der Lösung der Aufgabe besteht jetzt darin, einem derartigen Ventil weitere steuerbare Anschlüsse hinzuzufügen und somit an die Anzahl der Anschlüsse eines Pufferspeichers anzupassen. Dieses soll hier exemplarisch durch Erweiterung des Ventils mit drei steuerbaren Anschlüssen auf je ein Ventil mit vier (Tab. 3) und fünf (Tab. 4) steuerbaren Anschlüssen erfolgen:

**Tab. 3**

| Stellung neu | Punkt 0 | Bereich I | Punkt ⅓ | Bereich II | Punkt 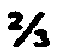 | Bereich III | Punkt 1 |
|---|---|---|---|---|---|---|---|
| stb. A. ① | offen | teilw. offen | geschl. | geschl. | geschl. | geschl. | Geschl. |
| stb. A. ② | geschl. | teilw. offen | offen | teilw. offen | geschl. | geschl. | Geschl. |
| stb. A. ③ | geschl. | geschl. | geschl. | teilw. offen | offen | teilw. offen | Geschl. |
| stb. A. ④ | geschl. | geschl. | geschl. | geschl. | geschl. | teilw. offen | Offen |

**Tab. 4**

| Stellung neu | Punkt 0 | Bereich I | Punkt ¼ | Bereich II | Punkt ½ | Bereich III | Punkt ¾ | Bereich IV | Punkt 1 |
|---|---|---|---|---|---|---|---|---|---|
| Stb. A. ① | offen | teilw. offen | geschl. | geschl. | geschl. | geschl. | geschl. | geschl. | Geschl. |
| Stb. A. ② | geschl. | teilw. offen | offen | teilw. offen | geschl. | geschl. | geschl. | geschl. | Geschl. |
| Stb. A. ③ | geschl. | geschl. | geschl. | teilw. offen | offen | teilw. offen | geschl. | geschl. | Geschl. |
| Stb. A. ④ | geschl. | geschl. | geschl. | geschl. | geschl. | teilw. offen | offen | teilw. offen | Geschl. |
| Stb. A. ⑤ | geschl. | geschl. | geschl. | geschl. | geschl. | geschl. | geschl. | teilw. offen | Offen |

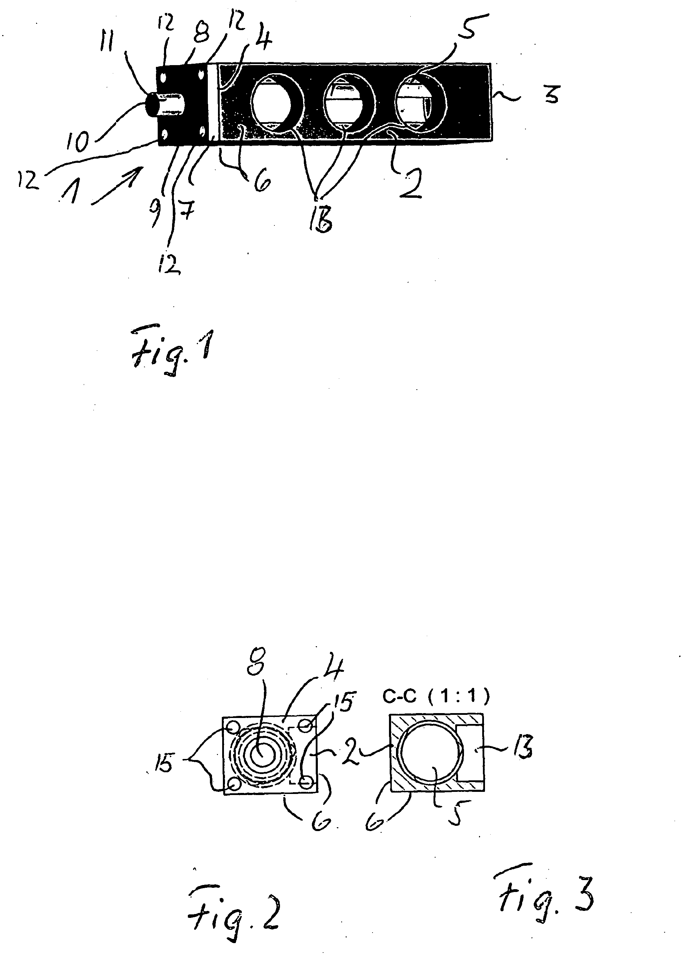

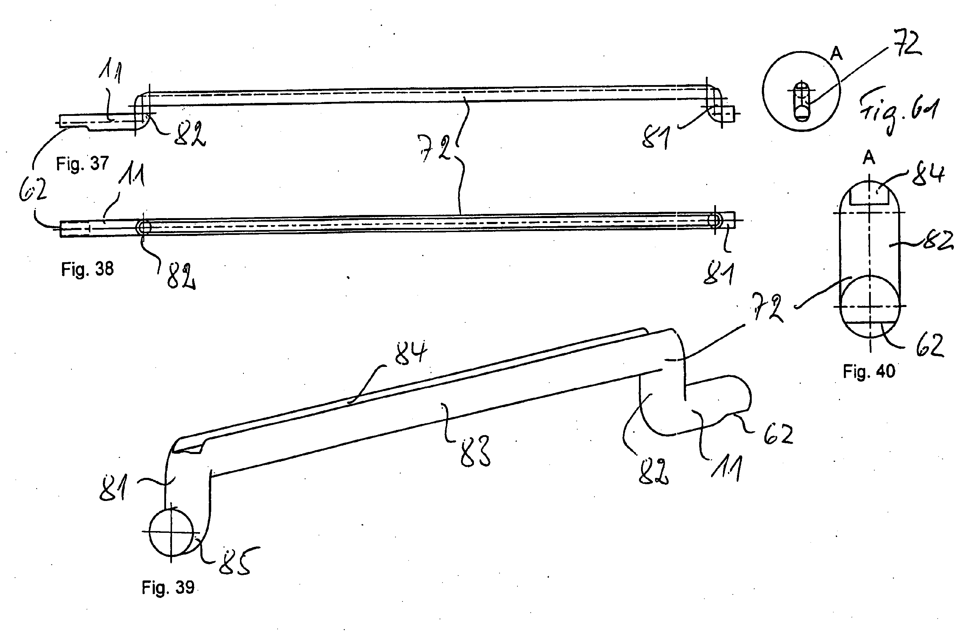

Nachfolgend werden anhand der Figuren 1 bis 62 der Zeichnungen mehrere Ausführungsbeipiele der Erfindung näher erläutert, wobei in den Fig. 1 bis 11 und 16 bis 26 jeweils nur Ventile mit drei Einlässen zu sehen sind, dasjenige aber, das anhand dieser drei Einlässe erklärt und beschrieben wird aber auch für die Ausführungen gilt, die vier oder mehr Einlässe aufweisen und unter die unabhängigen Ansprüche fallen.

In den Figuren 1 bis 62 der Zeichnungen zeigen:
Fig. 1 ein Mehrwegemischventil in perspektivischer Ansicht,
Fig. 2 eine Stirnansicht hierzu,
Fig. 3 einen Querschnitt hierzu,
Fig. 4 einen Längsschnitt hierzu,
Fig. 5 einen weiteren Längsschnitt mit gedrehter Ebene hierzu
Fig. 6 einen dritten Längsschnitt mit gedrehter Ebene hierzu,
Fig. 7 einen vierten Längsschnitt mit gedrehter Ebene hierzu,
Fig. 8 ein Kücken in perspektivischer Ansicht,
Fig. 9 das Kücken in einer Längsansicht hierzu,
Fig. 10 das Kücken in einer hierzu gedrehten Längsansicht,
Fig. 11 eine Stirnansicht hierzu,
Fig. 12 eine Variante der Erfindung am Ventilkücken in Ansicht,
Fig. 13 die Variante der Erfindung am Ventilkücken in einer weiteren Ansicht,
Fig. 14 eine Schemadarstellung,
Fig. 15 einen Pufferspeicher mit einem Heizkreis,
Fig. 16 ein Ventilgehäuse in Ansicht,
Fig. 17 das Ventilgehäuse in einer anderen Ansicht,
Fig. 18 das Ventilgehäuse in einer dritten Ansicht,
Fig. 19 das Ventilgehäuse in einer perspektivischen Ansicht,
Fig. 20 einen zu dem Ventilgehäuse zugehörigen Ventilkörper in Ansicht,
Fig. 21 den Ventilkörper in einer weiteren Ansicht,
Fig. 22 den Ventilkörper in einer Stirnansicht,
Fig. 23 den Ventilkörper in einem Schnitt,
Fig. 24 den Ventilkörper in einem weiteren Schnitt,
Fig. 25 den Ventilkörper in einem dritten Schnitt,
Fig. 26 den Ventilkörper in einer perspektivischen Ansicht,
Fig. 27 ein Ventilgehäuse in einer weiteren Ausführungsform in einem Schnitt,
Fig. 28 das Ventilgehäuse der weiteren Ausführungsform in einem weiteren Schnitt,
Fig. 29 das Ventilgehäuse der weiteren Ausführungsform in einem dritten Schnitt,
Fig. 30 einen zu dem Ventilgehäuse der weiteren Ausführungsform zugehörigen Ventilkörper in perspektivischer Ansicht,
Fig. 31 den Ventilkörper in einer weiteren Ansicht,
Fig. 32 den Ventilkörper in einer Stirnansicht,
Fig. 33 den Ventilkörper in einem Schnitt,
Fig. 34 den Ventilkörper in einem weiteren Schnitt,
Fig. 35 den Ventilkörper in einem dritten Schnitt,
Fig. 36 den Ventilkörper in einer dritten Ansicht,
Fig. 37 eine Stange in Ansicht,
Fig. 38 die Stange in einer weiteren Ansicht,
Fig. 39 die Stange in einer perspektivischen Ansicht,
Fig. 40 die Stange in einer dritten Ansicht,
Fig. 41 einen Stellkörper eines Mehrwegemischventiles in einer dritten Ausführungsform in Ansicht,
Fig. 42 den Stellkörper des Mehrwegemischventiles in der dritten Ausführungsform in einer weiteren Ansicht,
Fig. 43 den Stellkörper des Mehrwegemischventiles in der dritten Ausführungsform in einer dritten Ansicht,
Fig. 44 den Stellkörper des Mehrwegemischventiles in der dritten Ausführungsform in einer perspektivischen Ansicht,
Fig. 45 ein sternförmiges Führungselement in Ansicht,
Fig. 46 eine Stange in Ansicht,
Fig. 47 die Stange in einer weiteren Ansicht,
Fig. 48 eine Verbindungsmuffe,
Fig. 49 eine spezielle weiter Ausführungsform des erfindungsgemässen Mehrwegenmisch- oder -verteilventiles in Ansicht,
Fig. 50 das Mehrwegenmisch- oder -verteilventil in einer weiteren Ansicht,
Fig. 51 das Mehrwegenmisch- oder -verteilventil in einer dritten Ansicht,
Fig. 52 das Mehrwegenmisch- oder -verteilventil in einer perspektivischen Ansicht,
Fig. 53 das Ventilgehäuse des Mehrwegenmisch- oder -verteilventiles in Ansicht,
Fig. 54 das Ventilgehäuse des Mehrwegenmisch- oder -verteilventiles in einer weiteren Ansicht,
Fig. 55 das Ventilgehäuse des Mehrwegenmisch- oder -verteilventiles in einer weiteren Ansicht,
Fig. 56 das Ventilgehäuse des Mehrwegenmisch- oder -verteilventiles in einer perspektivischen Ansicht,
Fig. 57 einen weiteren Stellkörper für das Ventilgehäuse in Ansicht,
Fig. 58 den weiteren Stellkörper für das Ventilgehäuse in einer weiteren Ansicht,
Fig. 59 den weiteren Stellkörper für das Ventilgehäuse in einer dritten Ansicht,
Fig. 60 den weiteren Stellkörper für das Ventilgehäuse in einer perspektivischen Ansicht,
Fig. 61 ein Detail der Stange und
Fig. 62 einen Zusammenbauschnitt.

In allen 62 Figuren bedeuten gleiche Bezugszeichen jeweils die gleichen Einzelheiten.

Ein Mehrwegemischventil 1 gemäss Fig. 1 für eine nicht dargestellte Heizungsanlage weist ein rohrförmiges Ventilgehäuse 2 auf, das aus einem gezogenen Vierkantmessingrohr mit quadratischem Querschnitt besteht, das an seinen beiden Enden 3 und 4 offen ist, wobei sein Innenhohlraum 5 Zylinderform aufweist. Alternativ hierzu kann das Ventilgehäuse 2 auch als ein Schlag- oder Schmiedeteil geformt sein und an seinem Aussenmantel 6 Zylinderform besitzen. Das eine Ende 4 des Ventilgehäuses 2 ist mittels eines weiteren Deckels 7 verschlossen, der mit einer Lagerbohrung 8 versehen ist, durch die ein Zylinderstutzen 9 ragt, der an seinem Ende 10 einen Mitnehmer 11 aufweist. Der Deckel ist mittels vier Schrauben 12 am Ende 4 des Ventilgehäuses 2 befestigt; alternativ ist auch eine Befestigung mittels einer Bajonettverbindung möglich. Auf einer Seite des Aussenmantels 6 sind drei Bohrungen 13 erkennbar, die miteinander fluchten, wobei die Fluchtlinie parallel und im Abstand zur Mittellängsachse 14 des Ventilgehäuses 2 angeordnet ist. Alternativ ist auch eine Ausführung möglich, bei der die drei Bohrungen unter Aufrechterhaltung ihrer Axialverschiebung auf dem Umfang des Mantels verteilt angeordnet sind oder um 180° einander gegenüberliegen.

Die Fig. 2 zeigt eine Ansicht auf das Ende 4 des Ventilgehäuses 2. Es sind hier die Gewindelöcher 15 für die Schrauben 12 erkennbar. Im Schnitt der Fig. 3 ist eine der Bohrungen 13 sichtbar, die alle den zentralen Innenhohlraum 5 anschneiden und somit mit ihm und den anderen Bohrungen strömungsmittelmässig verbunden sind.

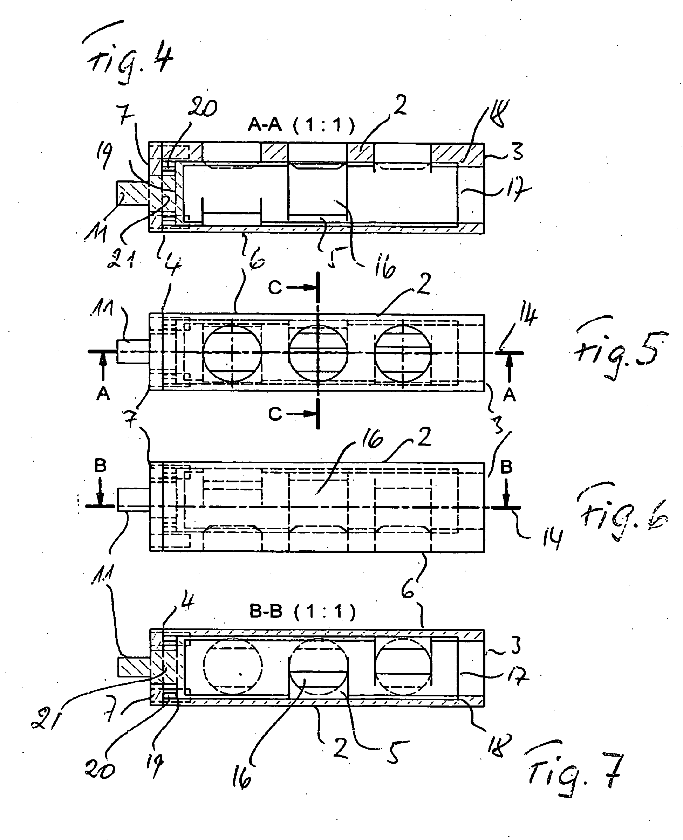

Im Längsschnitt der Fig. 4 ist ein in den zentralen Innenhohlraum 5 eingesetztes rohrförmiges Ventilkücken 16 erkennbar. Dieses Ventilkücken 16 liegt mit seiner einen kreisringförmigen Stirnseite 17 an einer Stufe 18 im zentralen Innenhohlraum 5 an. Mit seiner gegenüberliegenden Stirnseite 19 stützt es sich unter Belassung eines Spieles an einem Steg 20 ab, der an einer Innenseite 21 des weiteren Deckels 7 des Ventilgehäuses 2 angebracht ist.

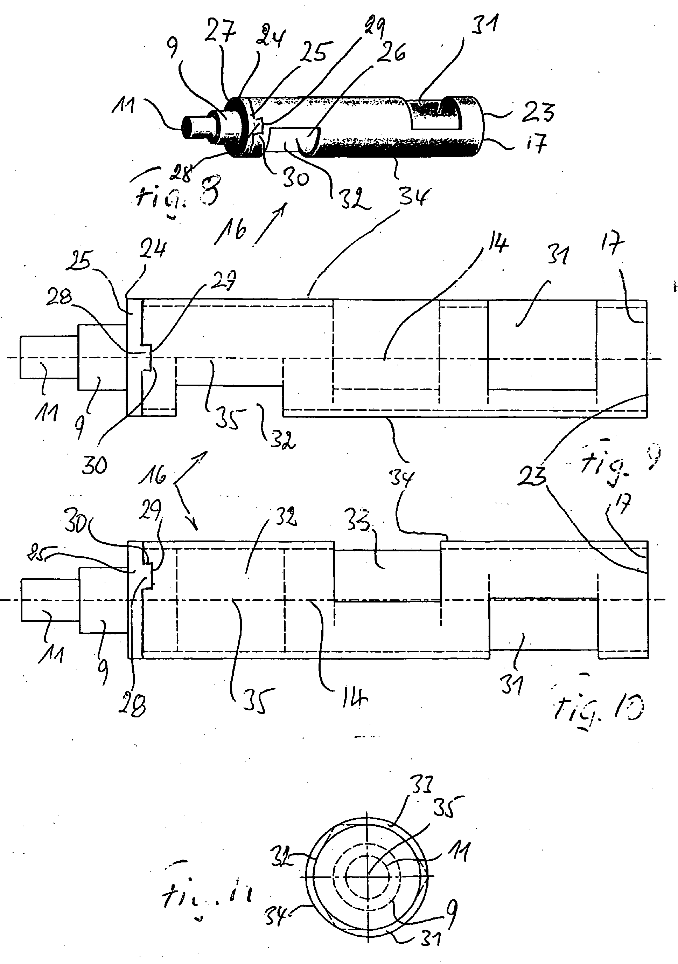

Die Fig. 8 lässt die Ausformung des Ventilkückens 16 gut erkennen:

Es besteht aus einem Kreisringrohr, dessen eines Ende 23 offen ist und die Stirnseite 17 bildet. Das gegenüberliegende Ende 24 ist mittels einer durchmessergleichen Scheibe 25 verschlossen, die auf der dem zylindrischen Innenhohlraum 26 abgewandten Seite 27 den Zylinderstutzen 9 trägt, der an seinem Ende den im Durchmessser kleineren Mitnehmer 11 aufweist. Die Scheibe 25 weist auf ihrer dem Kreisringrohr zugewandten Stirnseite zwei diametral gegenüberliegende Klauen 28 auf, die in entsprechende Ausnehmungen 29 an der Ringstirnfläche des Kreisringrohres am Ende 24 eingreifen und mit diesen eine Klauenkupplung 30 bilden. Es können auch drei oder mehr Klauen vorhanden sein.

Der zylindrische Innenhohlraum 26 steht strömungsmittelmässig mit drei Öffnungen 31, 32 und 33 in Verbindung, die durch planes Anfräsen des Zylindermantels 34 des Ventilkückens 16 erzeugt wurden. Je nach Drehstellung des eine mit der Mittellängsachse 14 zusammenfallende weitere Mittellängsachse 35 besitzenden Ventilkückens 16 kann die eine oder andere dieser Öffnungen 31 bis 33 oder mehrere teilweise mit einer der Bohrungen 13 zur Deckung gebracht werden oder vom Innenmantel des Ventilgehäuses 2 verschlossen werden oder mehr oder weniger grosse Überschneidungbereiche einnehmen.

Die drei Öffnungen 31, 32 und 33 bilden je einen Versetzungswinkel von 120° zueinander, sind aber in Richtung der Mittelachse 14 zueinander verschoben.

Das Ventilkücken 16 wird bevorzugt aus einem gezogenen Rohr gefertigt, in das die Öffnungen 31 bis 33 und die Ausnehmungen 29 für die Klauenkupplung 30 gefräst werden.

In der Fig. 5 ist eine solche Drehstellung des Ventilkückens 16 im Ventilgehäuse 2 dargestellt, dass die mittlere der Bohrungen 13 mit der Öffnung 33, die dem Mitnehmer 11 zugewandte Bohrung 13 mit der Öffnung 32 und auch die verbleibende Bohrung 13 mit der Öffnung 31 teilweise fluchten, also den Übertritt von Heizmedium in gedrosseltem Ausmass zulassen, während in einer anderen Stellung nur zwei der Bohrungen mit den entsprechenden Öffnungen teilweise fluchten oder in einer dritten Stellung nur eine der Öffnungen mit der Bohrung fluchtet und die anderen verschlossen sind.

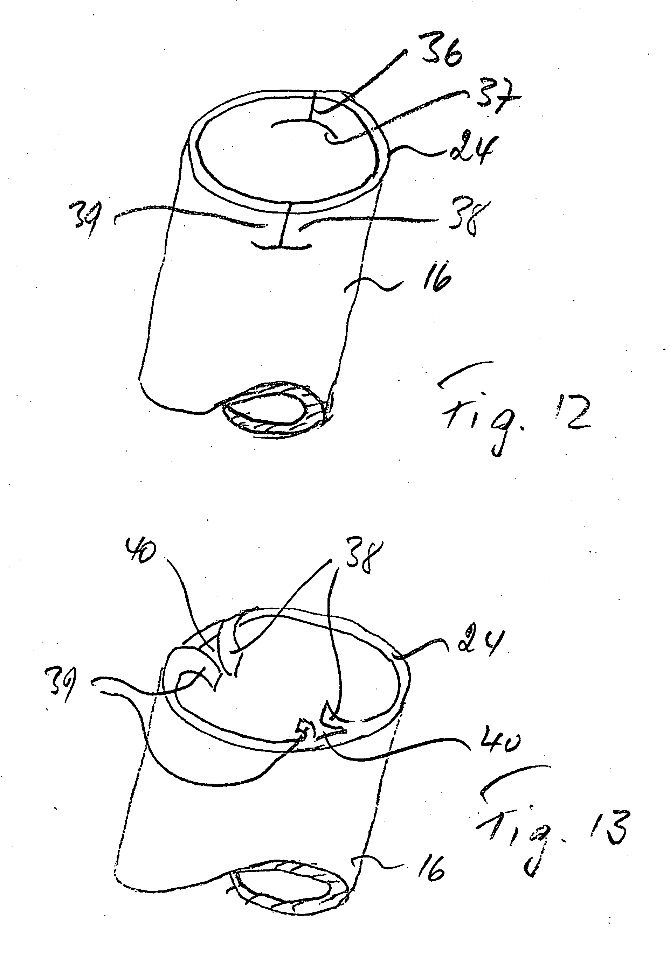

Eine bauliche Alternative des Ventilkückens 16 zeigen die Fig. 12 und 13 als Ansicht:

Die Ausnehmungen 29 sind sind durch radiales Einschneiden des Endes 24 und anschliessendes Einbiegen der durch die beiden Schnitte 36 und 37 entstandenen Lappen 38 und 39 entstanden, in die Zwischenräume 40 fahren die Klauen 28 ein.

Durch die Verbindung der einzelnen Bohrungen 13 mit den Öffnungen 31 bis 33 ist es möglich, zwei Wärmesenken vorzusehen und diese an eine Wärmequelle in Reihe geschaltet über das Mehrwegemischventil anzuschliessen oder die Wärmesenken parallel zueinandergeschaltet mit der Wärmequelle zu verbinden oder nur die eine oder nur die andere von der Wärmequelle speisen zu lassen.

Als Werkstoffe sowohl für das Ventilgehäuse wie auch für das Ventilkücken kommen Metalle, insbesondere Messing oder Kunststoffe infrage.

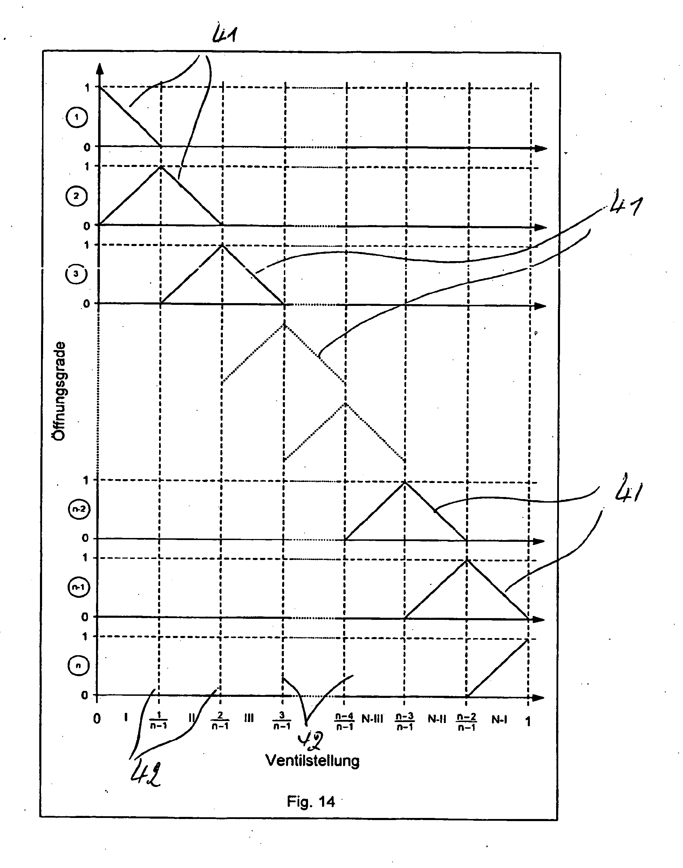

Die Fig. 14 stellt die Öffnungs- und Schliessbewegungen der Einlässe bei einem Mischventil oder der Auslässe bei einem Verteilventil dar. In den Kurvenzügen 41 sind deren Öffnungsgrade in Abhängigkeit der Drehwinkelstellungen des Stellkörpers abgebildet. Es sind n Ein- oder Auslässe möglich und n-1 Unterstellbereiche des Gesamtstellbereiches von 360° des Stellkörpers. Die Unterstellbereiche reichen von je einem Stellpunkt 42 bis zum nächsten. Beginnend mit dem ersten Stellpunkt 0 ist nur der Ein- oder Auslass 1 vollständig geöffnet, alle anderen geschlossen. Mit Aufnahme der Verstellbewegung des Stellkörpers in Richtung auf den zweiten Stellpunkt 1/n-1 im Unterstellbereich I beginnt der Ein- oder Auslass 1 zu drosseln und ist bei Erreichen des zweiten Stellpunktes 1/n-1 am Ende des Unterstellbereiches I vollständig geschlossen. Beim Ein- oder Auslass 2 findet ein Übergang von der Schliessung zur vollständigen Öffnung bei Erreichen des zweiten Stellpunktes 1/n-1 am Ende des Unterstellbereiches I statt. Alle anderen Ein- oder Auslässe 3 bis n sind und bleiben geschlossen. Mit Weiterführen der Verstellbewegung des Stellkörpers in Richtung auf den dritten Stellpunkt 2/n-1 im Unterstellbereich II beginnt der Ein- oder Auslass 3 zu öffnen und ist bei Erreichen des dritten Stellpunktes 2/n-1 am Ende des Unterstellbereiches II vollständig geöffnet. Beim Ein- oder Auslass 2 findet ein Übergang von der vollständigen Öffnung zur vollständigen Schliessung bei Erreichen des dritten Stellpunktes 2/n-1 am Ende des Unterstellbereiches II statt. Alle anderen Ein- oder Auslässe 1 und 4 bis n sind und bleiben geschlossen.

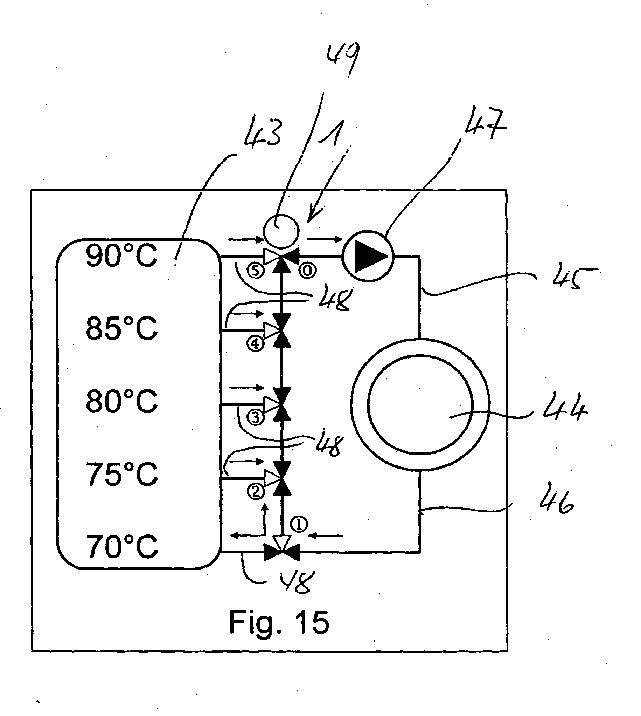

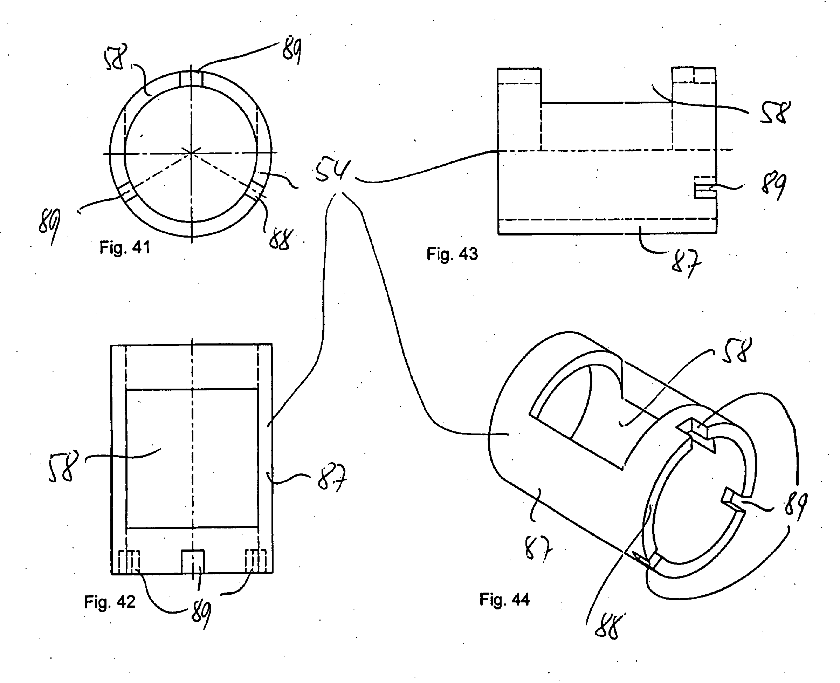

Die Fig. 15 stellt eine Anwendung der Erfindung an einem Pufferspeicher 43 dar, der eine Wärmesenke 44 über Leitungen 45 und 46 speist, in die eine Umwälzpumpe 47 eingefügt ist. Der zylindrische, stehende Pufferspeicher 43 weist auf unterschiedlichen Höhen Entnahmestutzen 48 auf, die zu einer später anhand der Fig. 41 bis 48 noch zu beschreibenden anderen Ausführungsform der Erfindung als Einlässe 2-5 des hier in Modulbauweise gestalteten, mit einem Antriebsmotor 49 versehenen, Mischventiles 1 führen.

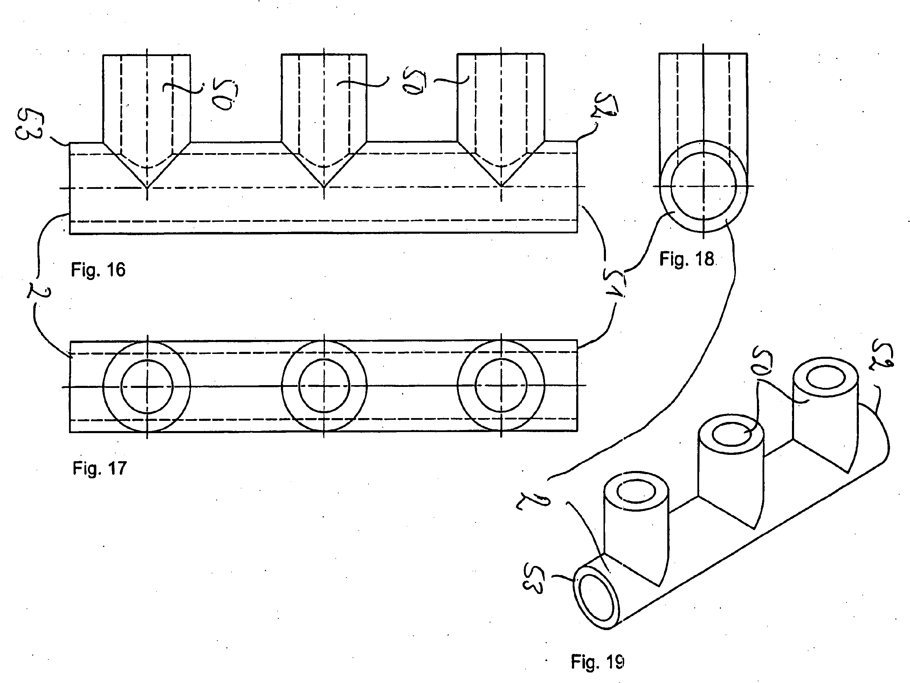

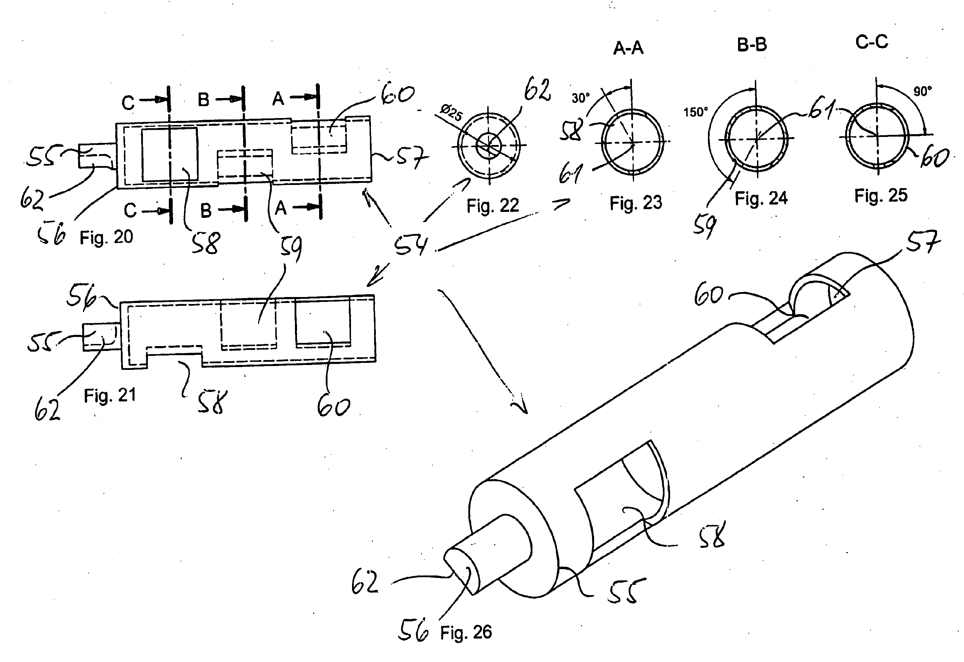

Anhand der Fig. 16 bis 18 wird eine weitere Variante der Erfindung beschrieben. Dargestellt ist das Ventilgehäuse 2, das aus einem Rohr besteht, von dem senkrecht drei oder mehr Rohre abgehen, die die n Ein- oder Auslässe 50 bilden, während der zugehörige Aus- oder Einlass 51 an einem der Rohrenden 52 oder 53 liegt. Der zugehörige Stellkörper 54 wird anhand der Darstellungen der Fig. 20 bis 26 erläutert. Er ist aus Kunststoff gespritzt und von hohlzylindrischer Gestalt, aber mit einem Zylinderzapfen 55 an einem Ende 56 versehen, während das andere Ende 57 offen ist. Der Stellkörper 54 weist passend zum Ventilgehäuse 2 drei Öffnungen 58 bis 60 auf, die in der Mittelachse 61 des Stellkörpers 54 die gleichen Abstände aufweisen, wie die Ein- oder Auslässe 50, aber im Umfang des Stellkörpers 54 um die aus den Schnittdarstellungen der Fig. 23 bis 25 ersichtlichen Winkelmasse versetzt angeordnet sind. Allgemein formuliert ist der Versatzwinkel gleich dem Öffnungswinkel und dieser beträgt 360°/n. Eine Abplattung 62 am Zylinderzapfen 55 dient dem Anschluss einer Stange oder dem Anschluss an einen Motor zum Verdrehen des Stellkörpers 54 im Ventilgehäuse 2.

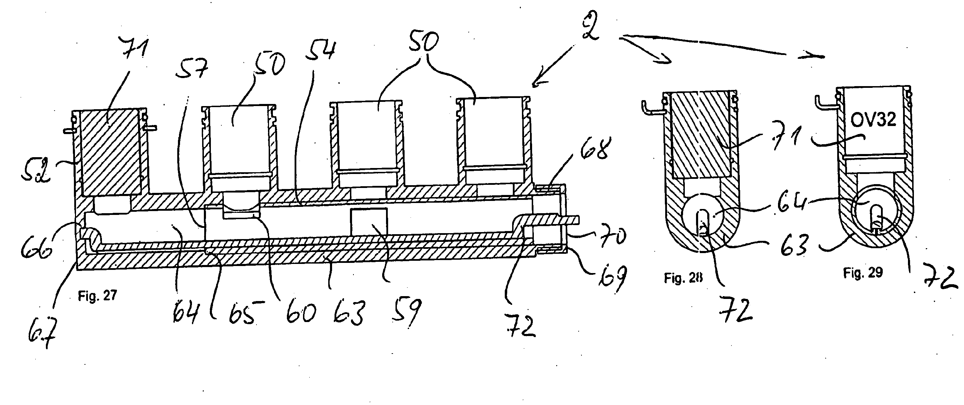

Eine weitere Variante der Erfindung wird nun anhand der Darstellungen der Fig. 27 bis 29 für das Ventilgehäuse 2 erläutert. Das im Wesentlichen hohlzylindrische Ventilgehäuse 2 ist als Guss-, Spritz- oder Pressteilteil gefertigt und besitzt einen Rohrkörper 63, der einen zylindrischen Innenhohlraum 64 aufweist, der mit einer Stufe 65 und mit einem Sackloch 66 an seinem einen geschlossenen Ende 67 versehen ist. Das gegenüberliegende andere Ende 68 trägt einen Gewindedeckel 69 mit einen Durchlass 70. An der Stufe 65 ruht der Stellkörper 54, der die drei Öffnungen 58 bis 60 und das offene Ende 57 aufweist. Das Ventilgehäuse 2 weist die drei Ein- oder Auslässe 50 auf, das auch vorhandene offene Ende 52 ist parallel zu den drei Ein- oder Auslässen 50 ausgerichtet und mit einem Rückflussverhinderer 71 ausgestattet. In das Sackloch 66 ist eine gekröpfte Stange 72 eingesetzt, die als Mitnehmer für den Stellkörper 54 dient und durch den Durchlass 70 ragt.

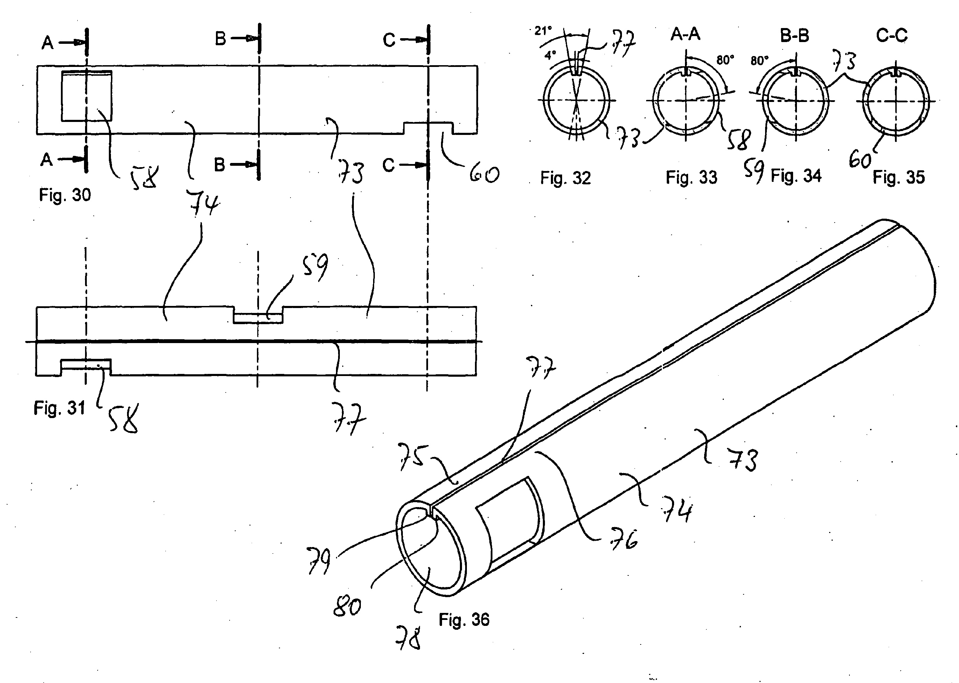

Unter Bezug auf die Darstellungen der Fig. 30 bis 36 wird der zum Ventilgehäuse 2 nach den Fig. 27 bis 29 passende Stellkörper 73 behandelt. Er ist als beidendig offener Hohlzylinder 74 aus einem gerollten Blech, einem geschlitzten gezogenen Rohr oder als gespritztes Teil gefertigt, dass zwischen seinen beiden Enden 75 und 76 einen Spalt 77 freilässt, der von in seinen Innenraum 78 gerichteten parallelen Vorsprüngen 79 und 80 begrenzt ist. Entlastet weist er - bei vergrössertem Spalt - einen grösseren Durchmesser auf als der der Innenwand des Ventilgehäuses. Er weist drei oder mehr bis zu n Öffnungen 58 bis 60 auf, die mit entsprechenden Aus- oder Einlässen 50 seines Ventilgehäuses 2 korrespondiert. Die Fig. 32 bis 35 erläutern die Winkelmasse des Spaltes 77 und der Begren-zungen der Vorsprünge 79 und 80 bzw. die Lage der drei Öffnungen 58 bis 60 zum Spalt 77. Auch hier ist der Versatzwinkel gleich dem Öffnungswinkel gehalten und dieser beträgt 360°/n.

Die Fig. 37 bis 40 und 61 erläutern die Ausführung der Stange 72. Sie weist die Form eines flachen U mit kurzen Beinen 81 und 82 und einem langen Mittelteil 83 auf, das auf der den Beinen abgewandten Seite eine Nut 84 trägt. In diese Nut gleiten die den Spalt 77 begrenzenden Vorsprünge 79 und 80. Am Bein 81 ist ein kreisrunder Fortsatz 85 zum Einsatz in das Sackloch 66, am Bein 82 ein mit der Abplattung 62 versehener Fortsatz als Mitnehmer 11 vorgesehen. Somit kann durch Verdrehen der Stange am Mitnehmer 11 der Stellkörper 73 mitverdreht werden und zwar durch Zugbeanspruchung, da der in Drehrichtung hintere Vorsprung des Ventilkückens von der eine Mitnehmerkurbel bildenden Stange gezogen wird, so dass sich der Durchmesser des Ventilkückens verringert.

Ein weiteres Ausführungsbeispiel des Ventiles nach der Erfindung wird nunmehr zurückkommend auf die Darstellung nach Fig. 15 in Verbindung mit den Fig. 41 bis 48 und 62 erläutert. Hiervon zeigen die Fig. 41 bis 44 eine abweichende Form des Stellkörpers 54: Der Stellkörper ist auch hier ein beidseits offener Hohlzylinder 86 mit einer Öffnung 58 an seinem Mantel 87. Seine eine Ringstirnseite 88 weist drei Nuten 89 auf.

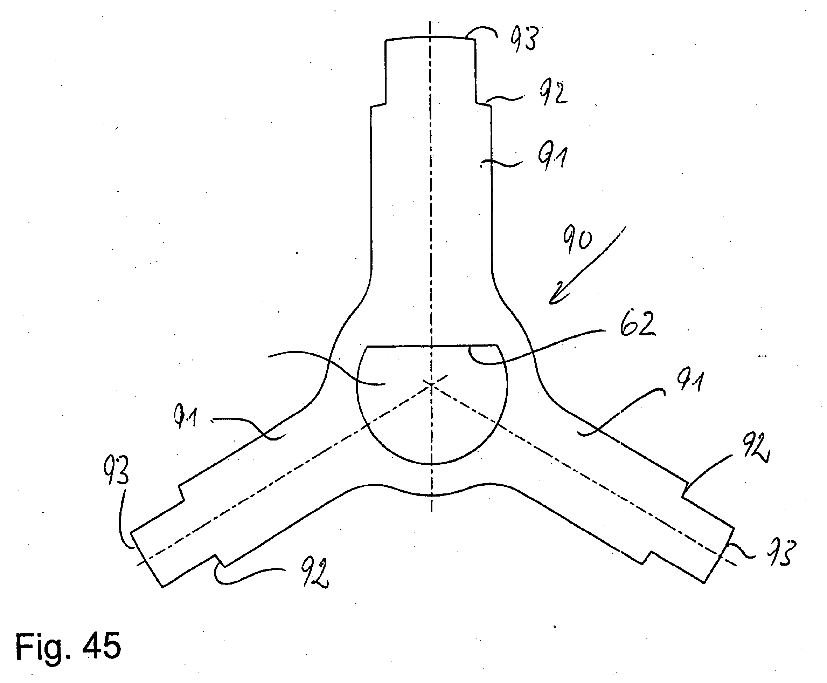

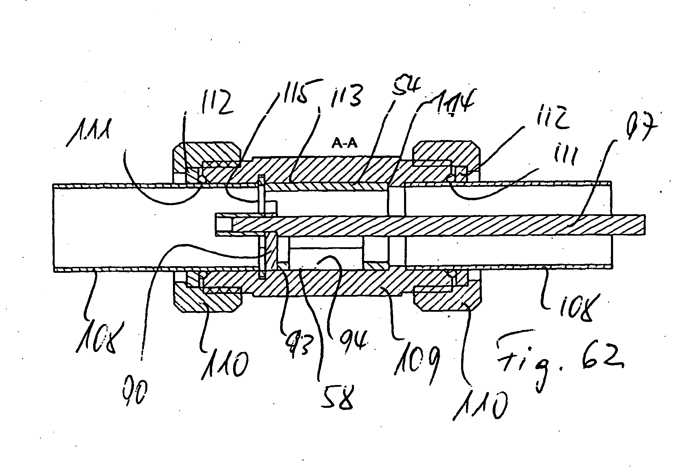

Die Fig. 45 bildet ein sternförmiges Führungselement 90 ab, das drei Arme 91 aufweist, die an ihren Enden 92 Absätze aufweisen. Diese sind so bemessen, dass sie in die Nuten 89 eingreifen können, wobei sie mit ihren Aussenflächen 93 an einer Innenwand 94 des Ventilgehäuses 95 nach Fig. 62 gleiten. Eine zentrale mit der Abplattung 62 versehene Ausnehmung 96 dient dazu, eine Stange hindurchzustecken, um eine Drehbewegung der Stange auf das sternförmige Führungselement 90 und damit auf den Stellkörper 73 zu übertragen.

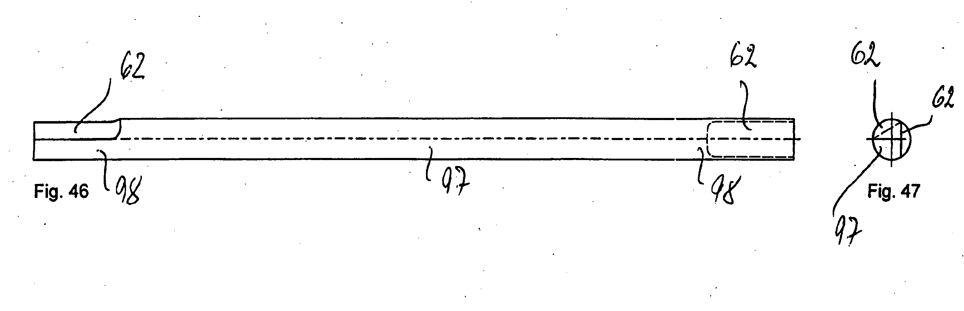

Diese Stange 97 ist ein gerader in den Fig. 46 und 47 abgebildeter zylindrischer Stab, der an beiden Enden 98 mit je einer Abplattung 62 versehen ist, die bei n, hier drei, Öffnungen des Misch- oder Verteilventiles 1 um 360°/n, hier 120° gegeneinander versetzt sind.

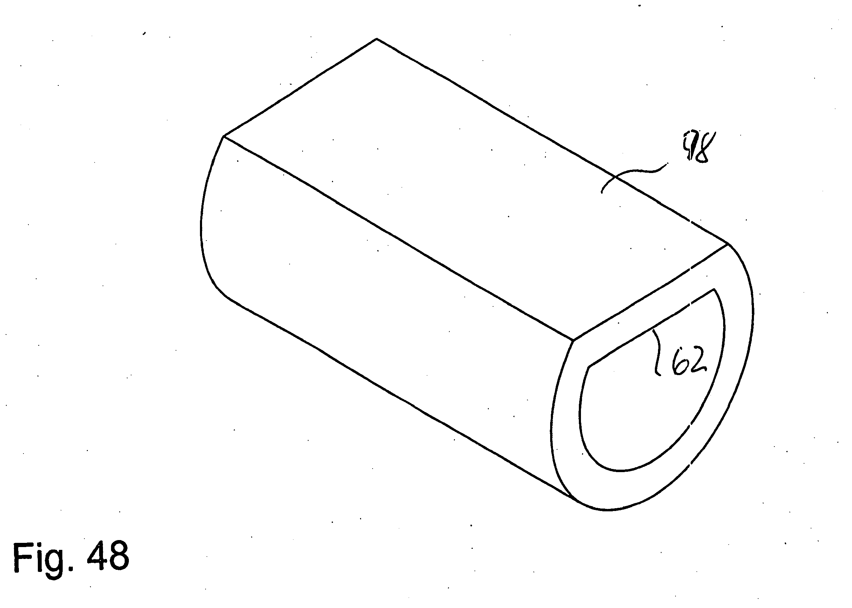

Die Fig. 48 erläutert eine Muffe 98, mit der Stangen 97 nach den Fig. 46 und 47 miteinander verbunden werden können. Sie ist durch einen Ringkörper gebildet, der im Querschnitt einen mit der Abplattung 62 verengten Kreis formt.

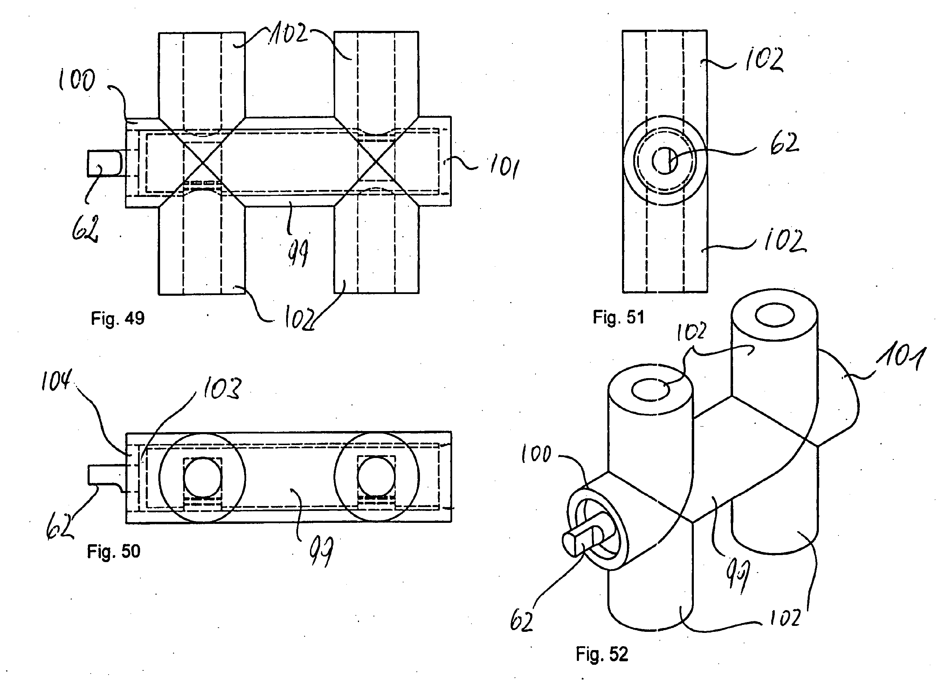

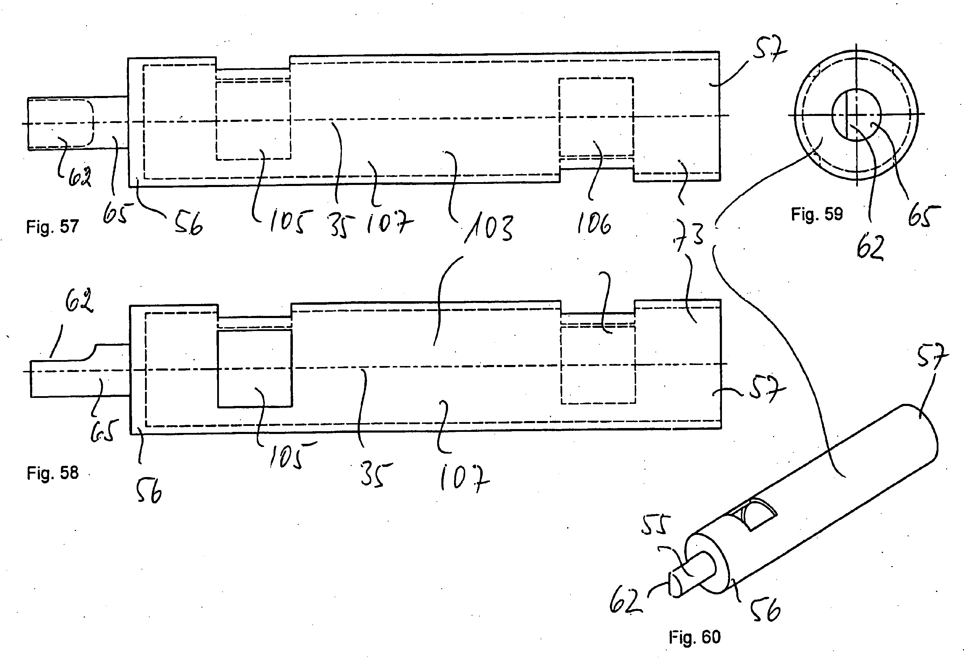

Die Fig. 49 bildet eine weitere Ausführungsmöglichkeit des Mehrwegemisch- oder -verteilventiles 1 ab. Das Ventilgehäuse 2 ist auch hier als beidendig offener Rohrkörper 99 gebildet, der an seinem einen Ende 100 den mit der Abplattung 62 versehenen Mitnehmer aufnimmt, während das andere gegenüberliegenden Ende 101 einen Ein- oder Auslass bildet. Die anderen Aus- oder Einlässe 102 sind paarweise gegenüberliegend am Zylindermantel des Rohrkörpers 99 angeformt. Der im Innenraum 104 des Ventilgehäuses 2 gelagerte Stellkörper 103 ist aus den Fig. 57 bis 60 näher ersichtlich.

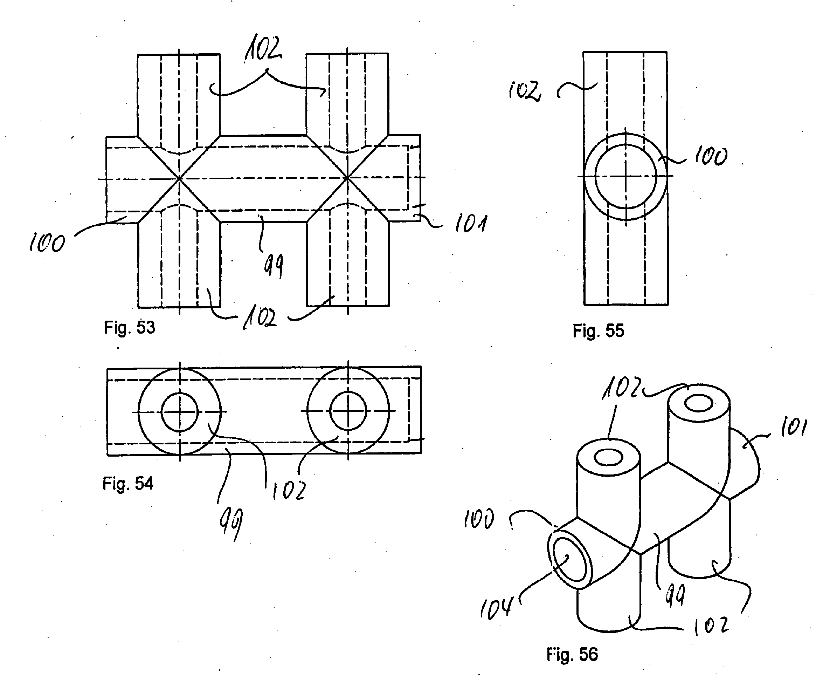

Die Fig. 53 bis 56 zeigen das Ventilgehäuse 2 allein. Die Fig. 57 bis 60 zeigen den Stellkörper 73 für das Ventilgehäuse 2 allein. Er weist als hohlzylindrischer Körper ausgestaltet ein mit einem die Abplattung 62 aufweisenden Zapfen 65 versehenes Ende 56 auf, das gegenüberliegende Ende 57 ist offen und bildet bei einem Mischventil den Auslass, bei einem Verteilventil den Einlass. Da auch hier der Öffnungswinkel gleich dem Versatzwinkel gehalten ist und dieser 360°/n beträgt, sind zwei um 90° in der Umfangslage zueinander versetzte Öffnungen 105 und 106 am Mantel 107 des Stellkörpers 73 vorgesehen, die mit den Aus- oder Einlässen 102 des Ventilgehäuses korrespondieren und daher entspre-chende Abstände in Richtung der Längsachse 35 aufweisen.

Nunmehr wird noch der modulare Aufbau des Mischventiles nach der Fig. 62 beschrieben, dessen Einzelteile bei der Abhandlung der Darstellungen der Fig. 41 bis 48 behandelt wurden, wobei auf die Fig. 15 verwiesen wird. Jedes der dort ersichtlichen modularen Einzelventile besitzt einen Ausbau, wie in der Fig. 62 gezeigt, sie alle zusammen bilden das Mehrwegemisch- oder -verteilventil. Die Modulventile sind über Rohrstücke 108 mit einander verbunden. Diese stekken mit jeweils einem Ende in einem das Ventilgehäuse 2 bildenden Muffenkörper 109, der einen nicht sichtbaren senkrechten Abgang aufweist und sind in ihm mittels Überwufmuttern 110 und Dichtungen 111 sowie Sperrscheiben 112 druckdicht gelagert. Der Muffenkörper 109 weist an seiner zylindrischen Innenwandung 113 eine Stufe 114 auf, gegen die sich der mit der Öffnung 58 versehene Stellkörper 54 anlehnt. Die Stange 97 durchsetzt das Rohrstück 108 und trägt das Führungselelement 90. Eine Lagesicherung von Führungselelement 90 und Stellkörper 54 findet durch einen Sprengring 115 statt. Das den Sprengring durchragende Ende 98 der Stange 97 trägt weiterhin die Muffe 98, die es überragt, so dass an dieser Seite im Rohrstück 108 eine weitere Stange 97 angekuppelt werden kann, wie auch an der gegenüberliegenden Seite im rechtsseitigen Rohrstück 108.

### Folgender Gedanke ist noch wichtig:

Durch die Einsätze der Misch- oder verteilventile nach der Erfindung werden zwei wesentliche Vorteile insbesondere für feststoff- und solarbeheizte Heizungsanlagen erzeugt:
1.Die Fähigkeit des Puffers zur Trinkwasserbereitung bleibt möglichst lange erhalten, was zu langen Nachheizintervallen und großen Nachheizchargen führt.
2.Der solarbeheizte untere Teil des Puffers erhält den größtmöglichen Volumenstrom des kältestmöglichen Anlagenwassers, da mit Verlassen des Stellbereiches I bereits kein Rücklauf mehr vor dem Eintritt in den Puffer zum Mischen entnommen wird, da der steuerbare Anschluß ① außerhalb des Stellbereiches I geschlossen ist.

Ein großer Vorteil der hier beschriebenen Mischventile und hydraulischen Schaltung ist, daß die Fließrichtung in den einzelnen Teilstrecken des Netzwerkes bekannt sind und lediglich die Beträge der Volumenströme von der Ventilstellung abhängen. Durch diese hydraulisch definierten Anlagenzustände sind unsinnige Kreisströmungen und Vermischungen ausgeschlossen, die stets zu Lasten der beiden vorgenannten Nutzen der Puffer gehen, nämlich der Trinkwasserstandzeit und des solaren Wärmeeintrags. Insbesondere ist an allen steuerbaren Anschlüssen die Strömungsrichtung beim Mischventil in das Ventil gerichtet (Zuläufe), beim Verteilventil jedoch aus dem Ventil hinaus (Abläufe). Es ist daher möglich und sinnvoll, Rückflußverhinderer in diese Anschlüsse zu integrieren.

## Patentansprüche

1. Mehrwege-Mischventil ( 1 ) mit einem Auslaß und n≥4 Einlässen in einem Gehäuse ( 2 ), wobei jedem der n Einlässe genau ein Stellpunkt innerhalb des sich zwischen zwei Endpunkten erstreckenden gesamten Stellbereiches zugeordnet ist, bei dem nur dieser Einlaß durch einen im Gehäuse ( 2 ) gelagerten beweglichen Stellkörper ( 54, 73 ) vollständig zum Auslaß geöffnet ist und alle anderen Einlässe durch diesen Stellkörper ( 54, 73 ) verschlossen sind, und jeder der beiden Endpunkte einem dieser n Stellpunkte entspricht, so daß sich der gesamte Stellbereich in n-1 Unterbereiche unterteilt, von denen jeder durch zwei Stellpunkte begrenzt wird und daß beim Durchfahren eines solchen Unterbereiches der zum ersten Stellpunkt dieses Unterbereiches gehörende, zunächst vollständig geöffnete Einlaß kontinuierlich geschlossen und der zum anderen Stellpunkt dieses Unterbereiches gehörende Einlaß kontinuierlich geöffnet wird, wobei alle anderen Einlässe geschlossen sind.

2. Mehrwegemischventil ( 1 ) nach Anspruch 1 mit einem Ventilgehäuse ( 2 ) und einem in ihm gelagerten Ventilkücken ( 16 ) zum Verbinden von Anschlüssen wenigstens einer Wärmequelle mit wenigstens einer Wärmesenke, von denen eine mit einer Umwälzpumpe versehen ist, **dadurch gekennzeichnet, dass** das Mehrwegemischventil ( 1 ) die Form eines Rohrstückes aufweist, welches das gleichfalls als Rohrstück ausgebildete Ventilkücken ( 16 ) aufnimmt.

3. Mehrwegemischventil ( 1 ) nach Anspruch 2, **dadurch gekennzeichnet, dass** das Ventilkücken ( 16 ) die Form eines an seinen beiden axialen Enden ( 23 und 24 ) offenen Rohres aufweist, welches an seinem einen Ende ( 23 ) eine Klauenkupplung ( 30 ) für einen Mitnehmer ( 11 ) aufweist.

4. Mehrwegemischventil ( 1 ) nach Anspruch 3, **dadurch gekennzeichnet, dass** die Klauenkupplung ( 30 ) aus wenigstens einer axialen Ausnehmung ( 29 ) im Mantel ( 34 ) des Ventilkückens ( 16 ) und einem darin eingreifenden Vorsprung ( 28 ) an einer deckelartigen Scheibe ( 25 ) besteht, der zugleich das Ende ( 24 ) des Ventilkückens ( 16 ) abdeckt.

5. Mehrwegemischventil ( 1 ) nach Anspruch 4, **dadurch gekennzeichnet, dass** die deckelartige Scheibe ( 25 ) auf der dem Ventilkücken ( 16 ) abgewandten Seite ( 27 ) einen den Mitnehmer ( 11 ) bildenden Zylinderstutzen trägt, der als Antrieb für das Ventilkücken ( 16 ) vorgesehen ist.

6. Mehrwegemischventil ( 1 ) nach Anspruch 5, **dadurch gekennzeichnet, dass** der Mitnehmer ( 11 ) in einem weiteren Deckel ( 7 ) gelagert ist, mit dem das Ventilgehäuse ( 2 ) auf der von der Lagerung des Ventilkückens ( 16 ) abgewandten Seite verschlossen ist.

7. Mehrwegemischventil ( 1 ) nach einem der Ansprüche 2 bis 6, **dadurch gekennzeichnet, dass** das Ventilkücken ( 16 ) drei Einlassöffnungen ( 31, 32 und 33 ) aufweist, die als radiale Einfräsungen im Mantel ( 34 ) des Ventilkückens ( 16 ) ausgebildet sind.

8. Mehrwegemischventil ( 1 ) nach Anspruch 7, **dadurch gekennzeichnet, dass** die drei Einlassöffnungen ( 31,32 und 33) des Ventilkükkens ( 16 ) auf einer parallel zur Mittelachse ( 35 ) des Ventilkükkens ( 16 ) verlaufenden axialen Mantellinie angeordnet sind.

9. Mehrwegemischventil ( 1 ) nach einem der Ansprüche 1 bis 8, **dadurch gekennzeichnet, dass** das Ventilgehäuse ( 2 ) als Schlagteil ausgebildet ist.

10. Mehrwegemischventil ( 1 ) nach einem der Ansprüche 1 bis 9, **dadurch gekennzeichnet, dass** das Ventilgehäuse ( 2 ) die drei Einlassöffnungen als über den Aussenmantel ( 6 ) des Ventilgehäuses ( 2 ) hervorragende Stutzen besitzt.

11. Mehrwegemischventil ( 1 ) nach Anspruch 10, **dadurch gekennzeichnet, dass** in den Stutzen der Einlassöffnungen ( 31, 32 und 33 ) Rückflussverhinderer gelagert sind.

12. Mehrwegemischventil ( 1 ) nach Anspruch 6, **dadurch gekennzeichnet, dass** der weitere Deckel ( 7 ) mittels einer Bajonettverbindung am Ventilgehäuse ( 2 ) befestigt ist.

13. Mehrwegemischventil ( 1 ) nach einem der Ansprüche 3 oder 4, **dadurch gekennzeichnet, dass** die Ausnehmungen ( 29 ) der Klauenkupplung ( 30 ) am Ventilkörper ( 16 ) durch zwei zueinander senkrechte Schnitte ( 36 und 37 ) an seinem Ende ( 24 ) und anschliessendes einwärts gerichtetes Einbiegen der hierdurch entstandenen Lappen ( 38 und 39 ) gebildet sind.

14. Mehrwegemischventil ( 1 ) nach Anspruch 1, **dadurch gekennzeichnet, dass** bei Ausbildung als Drehschieber und beim Vorhandensein von einer geraden Anzahl von Einlässen ( 102 ) jeweils die Hälfte der Einlässe ( 102 ) diametral am Ventilgehäuse ( 2 ) gegenüberliegend angeordnet sind.

15. Mehrwegemischventil ( 1 ) nach Anspruch 2, **dadurch gekennzeichnet, dass** das rohrförmige Ventilkücken ( 73 ) mit einem Längsschlitz ( 77 ) versehen ist, der beiderseits von einem in seinen Innenraum ( 78 ) gerichteten Vorsprung ( 79, 80 ) begrenzt ist, an denen eine Mitnehmerstange ( 72 ) angreift.

16. Mehrwegemischventil ( 1 ) nach Anspruch 15, **dadurch gekennzeichnet, dass** das rohrförmige Ventilkücken ( 73 ) im entlasteten ausgebauten Zustand einen geringfügig grösseren Durchmesser als der der Ventilgehäusebohrung aufweist, so dass sich im eingebauten Zustand das Ventilkücken ( 73 ) an die Innenwand der Ventilgehäusebohrung anpresst und dass die beiden Vorsprünge ( 79, 80 ) in einer Nut ( 84 ) der als Mitnehmerkurbel ausgebildeten Stange ( 72 ) eingefasst werden, die den in Drehrichtung des Stellkörpers ( 73 ) hinteren Vorsprung auf Zug beansprucht.

17. Mehrwegemischventil ( 1 ) nach einem der Ansprüche 1 bis 16, **dadurch gekennzeichnet, dass** das Ventilgehäuse ( 2 ) modulartig in Form von einzelnen T-Stücken aufgebaut ist, die jeweils ein Ventilkücken ( 54 ) lagern, wobei die senkrechten Abgänge der einzelnen T-Stücke die Einlässe bilden und die geraden Durchgänge der einzelnen T-Stücke durch Rohre variabler Länge miteinander verbunden sind.

18. Mehrwegemischventil ( 1 ) nach Anspruch 17, **dadurch gekennzeichnet, dass** die Ventilkücken ( 54 ) der einzelnen T-Stücke durch eine Kupplung gerader Stangen ( 97 ) variabler Länge miteinander starr verbunden sind und dass der von einem zum anderen T-Stück notwendige Drehwinkelversatz in den Stangen ( 97 ) vorgesehen ist.

19. Mehrwegemischventil ( 1 ) nach Anspruch 18, **dadurch gekennzeichnet, dass** die Stangen ( 97 ) an ihren Enden ( 98 ) gegeneinander versetzte Hinterschneidungen ( 62 ) aufweisen, so dass die Stangen ( 97 ) bei einer Kupplung durch Muffen ( 98 ) einen vorbestimmten Drehversatz aufweisen.

20. Mehrwegemischventil ( 1 ) nach Anspruch 16 oder 17, **dadurch gekennzeichnet, dass** zur Drehung der Ventilkücken ( 54 ) der einzelnen T-Stücke sternförmige Führungselemente ( 90 ) vorgesehen sind, die unverdrehbar mit der Stange ( 97 ) und mit dem Ventilkücken ( 54 ) verbunden sind und sich mit ihren Armen ( 91 ) an der Innenwand des Ventilkückens ( 54 ) abstützen.

21. Mehrwegemischventil ( 1 ) nach Anspruch 20, **dadurch gekennzeichnet, dass** die sternförmigen Führungselelemente ( 90 ) mit ihren Armen ( 91 ) in stirnseitige Ausnehmungen ( 89 ) der Ventilkücken ( 54 ) eingelegt sind.

22. Mehrwege-Verteilventil (1) mit einem Einlaß und n≥4 Auslässen in einem Ventilgehäuse ( 2 ), wobei jedem der n Auslässe genau ein Stellpunkt innerhalb des sich zwischen zwei Endpunkten erstreckenden gesamten Stellbereiches zugeordnet ist, bei dem nur dieser Auslaß durch einen im Ventilgehäuse ( 2 ) gelagerten beweglichen Stellkörper ( 54, 73 ) vollständig zum Einlaß geöffnet ist und alle anderen Auslässe durch diesen Stellkörper ( 54, 73 ) verschlossen sind, und jeder der beiden Endpunkte einem dieser n Stellpunkte entspricht, so daß sich der gesamte Stellbereich in n-1 Unterbereiche unterteilt, von denen jeder durch zwei Stellpunkte begrenzt wird und daß beim Durchfahren eines solchen Unterbereiches der zum ersten Stellpunkt dieses Unterbereiches gehörende, zunächst vollständig geöffnete Auslaß kontinuierlich geschlossen und der zum anderen Stellpunkt dieses Unterbereiches gehörende Auslaß kontinuierlich geöffnet wird, wobei alle anderen Auslässe geschlossen sind.

## Claims

1. Manifold mixing valve (1) with one outlet and n≥4 inlets in a body (2) wherein each of the n inlets is allocated exactly one setting point within the entire adjusting range extending between two end points with only this inlet being completely opened towards the outlet thanks to a movable actuating body (54, 73) positioned in the body (2) and all other inlets being closed by this actuating body (54, 73) and each of the two end points corresponding to one of these n setting points, so that the entire adjusting range is divided into n-1 subdivisions of which each is confined by two setting points and that when such a subdivision is passed through the initially completely opened inlet belonging to the first setting point of this subdivision is permanently closed and the other inlet belonging to the other setting point of this subdivision is permanently opened, wherein all other inlets are closed.

2. Manifold mixing valve (1) according to claim 1 with a valve body (2) and a valve tap (16) positioned therein in order to link the connections of at least one heat source with at least one heat sink of which one is supplied with a circulator pump, **characterised in that** the manifold mixing valve (1) has the form of a pipe section which takes up the valve tap (16) equally designed as a pipe section.

3. Manifold mixing valve (1) according to claim 2, **characterised in that** the valve tap (16) has the form of a pipe open at both its axial ends (23 and 24) which at one end (23) features a claw coupling (30) for a driving dog (11).

4. Manifold mixing valve (1) according to claim 3, **characterised in that** the claw coupling (30) consists of at least one axial recess (29) in the casing (34) of the valve tap (16) and a projection (28) at a cover-like disc (25) gearing into it with the projection covering the end (24) of the valve tap (16) at the same time.

5. Manifold mixing valve (1) according to claim 4, **characterised in that** the cover-like disc (25) on the side (27) turning away from the valve tap (16) bears a cylinder socket creating the driving dog (11) designed for driving the valve tap (16).

6. Manifold mixing valve (1) according to claim 5, **characterised in that** the driving dog (11) is seated in a further cover (7) closing the valve body (2) on the side turned away from the valve tap (16) bearing.

7. Manifold mixing valve (1) according to one of the claims 2 to 6, **characterised in that** the valve tap (16) exhibits three inlets openings (31,32 and 33) which are formed as radial milled recess in the casing (34) of the valve tap (16).

8. Manifold mixing valve (1) according to claim 7, **characterised in that** the three inlet openings (31, 32 and 33) of the valve tap (16) are arranged on an axial surface line running in parallel to the centre axis (35) of the valve tap (16).

9. Manifold mixing valve (1) according to one of the claims 1 to 8, **characterised in that** the valve body (2) is designed as striking part.

10. Manifold mixing valve (1) according to one of the claims 1 to 9, **characterised in that** the valve body (2) features the three inlet openings as sockets protruding from the outer casing of the valve body (2).

11. Manifold mixing valve (1) according to claim 10, **characterised in that** non-return valves are positioned within the sockets of the inlet openings (31, 32 and 33).

12. Manifold mixing valve (1) according to claim 6, **characterised in that** the further cover (7) is fastened to the valve body (2) by means of a bayonet connection.

13. Manifold mixing valve (1) according to one of the claims 3 or 4, **characterised in that** the recesses (29) of the claw coupling (30) at the valve body (16) are created by two cuts (36 and 37) in vertical proportion to one another at its end (24) and following inward-directed bending of the thus created tangs (38 and 39).

14. Manifold mixing valve (1) according to claim 1, **characterised in that** with formation as rotary slide valve and with existence of an even number of inlets (102) half of the inlets (102) each are arranged diametrically opposed to the valve body (2).

15. Manifold mixing valve (1) according to claim 2 **characterised in that** the tubular valve tap (73) has a longitudinal slot (77) which is confined from both sides by a projection (79, 80) directed into its interior space at which engages a driving dog rod (72).

16. Manifold mixing valve (1) according to claim 15, **characterised in that** the tubular valve tap (73) has a slightly bigger diameter in its relieved, disassembled state than the valve body bore so that in the assembled state the valve tap (73) presses against the interior wall of the valve body bore and that the two projections (79, 80) are enclosed in a groove (84) of the rod (72) formed as driving dog crank which in turning direction of the actuating body (73) subjects the rear projection to tensile loading.

17. Manifold mixing valve (1) according to one of the claims 1 to 16, **characterised in that** the valve body (2) is set up modularly in form of individual T-pieces, each of them bearing a valve tap (54) wherein the vertical outlets of the individual T-pieces create the inlets and the straight passageways of the individual T-pieces are connected with each other by means of pipes of variable length.

18. Manifold mixing valve (1) according to claim 17, **characterised in that** the valve taps (54) of the individual T-pieces are rigidly connected with each other by a coupling of straight rods (97) of variable length and that the rotation angle offset required from one T-piece to another is provided in the rods (97).

19. Manifold mixing valve (1) according to claim 18, **characterised in that** the rods (97) at their ends (98) exhibit undercuts (62) which are offset against each other so that the rods (97) when coupled with bushings (98) have a predetermined rotational offset.

20. Manifold mixing valve (1) according to claim 16 or 17, **characterised in that** for turning the valve taps (54) of the individual T-pieces star-shaped guide elements are provided which are connected with the rod (97) and with the valve tap (54) in a non-twistable manner and which support themselves with their arms (91) at the inner wall of the valve tap (54).

21. Manifold mixing valve (1) according to claim 20, **characterised in that** the star-shaped guide elements (90) are inserted with their arms (91) into frontal recesses (89) of the valve tap (54).

22. Manifold distributing valve (1) with one inlet and n≥4 outlets in a valve body (2) wherein each of the n outlets is allocated exactly one setting point within the entire adjusting range extending between two end points with only this outlet being completely opened towards the inlet thanks to a movable actuating body (54, 73) positioned in the body (2) and all other outlets being closed by this actuating body (54, 73) and each of the two end points corresponding to one of these n setting points, so that the entire adjusting range is divided into n-1 subdivisions of which each is confined by two setting points and that when such a subdivision is passed through the initially completely opened outlet belonging to the first setting point of this subdivision is permanently closed and the other outlet belonging to the other setting point of this subdivision is permanently opened, wherein all other outlets are closed.

## Revendications

1. Vanne mélangeuse à plusieurs voies (1) avec une sortie et n≥4 entrées dans un corps de vanne (2), chacune des entrées étant affectée exactement à un point de réglage au sein du domaine de réglage entier s'étendant entre deux extrémités, et dans lequel seulement cette entrée est complètement ouverte en direction de la sortie par un corps d'actionnement (54, 73) mobile situé dans le corps (2) et tous les autres entrées sont fermées par ce corps d'actionnement (54, 73) et chacune des deux extrémités correspondant à un de ces points n de réglage, de sorte que le domaine de réglage entier soit divisé en n-1 sous-divisions dont chacune est limitée par deux points de réglage et, qu'en passant une telle sous-division, l'entrée initialement complètement ouverte et appartenant au premier point de réglage de cette sous-division étant constamment fermée et que l'autre entrée appartenant à l'autre point de réglage de cette sous-division étant constamment ouverte pendant que toutes les autres entrées sont fermées.

2. Vanne mélangeuse à plusieurs voies (1) selon la revendication 1 avec un corps de vanne (2) et avec une vanne à boisseau (16) y positionnée pour connecter des raccords d'au moins une source de chaleur avec au moins un dissipateur thermique dont un des deux est équipé d'une pompe de circulation, **caractérisée en ce que** la vanne mélangeuse à plusieurs voies (1) a la forme d'une section de tube intégrant la vanne à boisseau (16) également en forme d'une section de tube.

3. Vanne mélangeuse à plusieurs voies (1) selon la revendication 2, **caractérisée en ce que** la vanne à boisseau (16) présente la forme d'un tube ouvert à ces deux extrémités axiales (23 et 24) lesquelles présentent à l'un de ces bouts (23) un accouplement à griffes (30) pour un entraîneur (11).

4. Vanne mélangeuse à plusieurs voies (1) selon la revendication 3, **caractérisée en ce que** l'accouplement à griffes (30) se compose d'au moins un creux axial (29) dans la jupe (34) de la vanne à boisseau (16) et d'une saillie (28) d'engrenage d'un disque en forme de couvercle (25), laquelle couvre en même temps l'extrémité (24) de la vanne à boisseau (16).

5. Vanne mélangeuse à plusieurs voies (1) selon la revendication 4, **caractérisée en ce que** le disque en forme de couvercle (25) porte un manchon cylindrique formant l'entraîneur (11) au côté détourné (27) de la vanne à boisseau -(16) prévu en tant qu'actionneur pour la vanne à boisseau (16).

6. Vanne mélangeuse à plusieurs voies (1) selon la revendication 5, **caractérisée en ce que** l'entraîneur (11) est monté dans un couvercle (7) ultérieur avec lequel le corps de vanne (2) est fermé sur le côté détourné du placement de la vanne à boisseau (16).

7. Vanne mélangeuse à plusieurs voies (1) selon l'une des revendications 2 à 6, **caractérisée en ce que** la vanne à boisseau (16) dispose de trois ouvertures d'entrée (31,32 et 33) sous forme de fraisage radial dans la jupe (34) de la vanne à boisseau (16).

8. Vanne mélangeuse à plusieurs voies (1) selon la revendication 7, **caractérisée en ce que** les trois ouvertures d'entrée (31, 32 et 33) de la vanne à boisseau (16) sont disposées sur la génératrice axiale passant en parallèle à l'axe central (35) de la vanne à boisseau (16).

9. Vanne mélangeuse à plusieurs voies (1) selon l'une des revendications 1 à 8, **caractérisée en ce que** le corps de vanne (2) est configuré en tant que barre de frappe.

10. Vanne mélangeuse à plusieurs voies (1) selon l'une des revendications 1 à 9, **caractérisée en ce que** le corps de vanne (2) ayant les trois ouvertures d'entrée en tant que manchon faisant saillie sur l'enveloppe extérieure (6) du corps de vanne (2).

11. Vanne mélangeuse à plusieurs voies (1) selon la revendication 10, **caractérisée en ce qu'**il y a des clapets anti-retour dans les manchons des ouvertures d'entrée (31, 32 et 33).

12. Vanne mélangeuse à plusieurs voies (1) selon la revendication 6, **caractérisée en ce que** le couvercle (7) ultérieur est attaché par un raccord baïonnette au corps de vanne (2).

13. Vanne mélangeuse à plusieurs voies (1) selon l'une des revendications 3 ou 4, **caractérisée en ce que** les creux (29) d'accouplement à griffes (30) au corps de vanne (16) sont créés par deux coupures (36 et 37) perpendiculaire l'une à l'autre à l'extrémité (24) du corps et puis d'une courbure incurvée des pattes (38 et 39) y résultant.

14. Vanne mélangeuse à plusieurs voies (1) selon la revendication 1, **caractérisée en ce qu'**en configuration en tant que soupape tournante à boisseau et, en cas d'un nombre pair d'entrées (102), chaque fois la moitié des entrées (102) est disposée diamétralement opposée au corps de vanne (2).

15. Vanne mélangeuse à plusieurs voies (1) selon la revendication 2, **caractérisée en ce que** la vanne à boisseau tubulaire (73) est équipée d'une fente oblongue (77) qui, de part et d'autre, est délimitée par des saillies (79, 80) orientées vers son intérieur, auxquelles s'engage une tige d'entraînement (72).

16. Vanne mélangeuse à plusieurs voies (1) selon la revendication 15, **caractérisée en ce que** la vanne à boisseau -tubulaire (73), dans l'état équilibré et démonté, dispose d'un diamètre légèrement plus grand que celui du perçage du corps de vanne, de sorte que, monté, la vanne à boisseau (73) se presse contre la paroi intérieure du perçage du corps de vanne et que les deux saillies (79, 80) sont encadrées dans une rainure (84) de la tige (72) formée en tant que manivelle d'entraînement qui soumet la saillie arrière à l'effort de traction dans le sens du rotation du corps d'actionnement (73).

17. Vanne mélangeuse à plusieurs voies (1) selon l'une des revendications1 à 16, **caractérisée en ce que** le corps de vanne (2) est construit de façon modulaire sous forme de raccords en T individuels dont chacun prends une vanne à boisseau (54), pendant que les sorties verticales des raccords en T individuels créent les entrées et les passages rectilignes des raccords en T sont connectés entre eux l'autre par des tubes de longueur variable.

18. Vanne mélangeuse à plusieurs voies (1) selon la revendication 17, **caractérisée en ce que** les vannes à boisseau (54) des raccords en T individuels sont couplées rigidement l'une avec l'autre par des tiges (97) rectilignes d'une longueur variable et que le déport de l'angle de rotation est prévu dans les tiges (97).

19. Vanne mélangeuse à plusieurs voies (1) selon la revendication 18, **caractérisée en ce que** les tiges (97) à leur extrémités (98) ont des contre-dépouilles (62) en déport l'un contre l'autre de sorte que les tiges (97) démontrent un déport à rotation prédéfini lors d'un accouplement par manchons (98).

20. Vanne mélangeuse à plusieurs voies (1) selon la revendication 16 ou 17, **caractérisée en ce que**, pour tourner les vannes à boisseau (54) des raccords en T individuels sont prévus des éléments de guidage en forme d'étoile raccordés de manière non-tournable à la tige (97) et à la vanne à boisseau (54) et qui, avec leurs bras (91), s'appuient sur la paroi intérieure de la vanne à boisseau (54).

21. Vanne mélangeuse à plusieurs voies (1) selon la revendication 20, **caractérisée en ce que** les éléments de guidage en forme d'étoile (90), avec leurs bras, sont insérés dans les creux (89) frontaux des vannes à boisseau.

22. Vanne de distribution à plusieurs voies (1) avec une entrée et n≥4 sorties dans un corps de vanne (2), chacune des sorties n étant affectée exactement à un point de réglage au sein du domaine de réglage entier s'étendant entre deux extrémités, et dans lequel seulement cette sortie est complètement ouverte en direction de l'entrée par un corps d'actionnement (54, 73) mobile situé dans le corps (2) et tous les autres sorties sont fermées par ce corps d'actionnement (54, 73) et chacune des deux extrémités correspondant à un de ces points de réglage n, de sorte que le domaine de réglage entier soit divisé en n-1 sous-divisions dont chacune est limitée par deux points de réglage et, qu'en passant une telle sous-division, l'entrée initialement complètement ouverte et appartenant au premier point de réglage de cette sous-division étant constamment fermée et que l'autre entrée appartenant à l'autre point de réglage de cette sous-division étant constamment ouverte pendant que toutes les autres sorties sont fermées.
